# EUROPÄISCHE PATENTSCHRIFT

(11) **EP 2 560 406 B1**
(45) Veröffentlichungstag und Bekanntmachung des Hinweises auf die Patenterteilung: **13.06.2018**
(21) Anmeldenummer: 12177845.0
(22) Anmeldetag: 25.07.2012
(51) Int. Cl.: H04Q 9/00

(54) **SCHNITTSTELLENEINRICHTUNG UND SYSTEM MIT EINER SCHNITTSTELLENEINRICHTUNG**
INTERFACE DEVICE AND SYSTEM WITH AN INTERFACE DEVICE
INSTALLATION D'INTERFACE ET SYSTÈME AVEC UNE INSTALLATION D'INTERFACE

(30) Priorität: 16.08.2011 DE 102011110217
(43) Veröffentlichungstag der Anmeldung: 20.02.2013
(73) Patentinhaber: envia Mitteldeutsche Energie AG, 09114 Chemnitz (DE)
(72) Erfinder: Sauer, Tobias, 03130 Spremberg (DE); Lange, André, 06112 Halle (DE)
(74) Vertreter: Cohausz & Florack

(56) Entgegenhaltungen:
- EP-A2- 2 227 033
- WO-A1-2011/009495
- WO-A2-2005/076240
- DE-A1-102007 040 660
- DE-A1-102008 030 030

## Beschreibung

Der Gegenstand betrifft eine Schnittstelleneinrichtung mit zumindest einem Sensormesswerte als Eingangswert empfangenden Eingang, zumindest einem den Eingangswert in einen Ausgangswert wandelnden Mikroprozessor, und einem den Ausgangswert ausgebenden Kommunikationsmittel. Darüber hinaus betrifft der Gegenstand ein System mit einer solchen Schnittstelleneinrichtung.

Aus der deutschen Offenlegungsschrift DE 10 2007 040 660 A1 ist ein System und ein Verfahren zur Steuerung von mehreren Schaltvorrichtungen bekannt. Dieses System schlägt eine Systemkomponente vor, welche über ein Kommunikationsnetz mit einer Zentraleinheit kommunizieren kann. Die Systemkomponente verfügt mehrere Schaltausgänge und ein Interface zur Kommunikation mit einem Energiemengenzähler.

Die deutsche Offenlegungsschrift DE 10 2008 030 030 A1 beschreibt ein Datenübermittlungssystem zur Erfassung und Speicherung von Verbrauchsdaten. Hierzu ist ein Sender und ein Empfänger vorgesehen. Der Sender empfängt Messdaten von verschiedenen Komponenten und überträgt diese an einen Empfänger.

Aus der Veröffentlichung WO 2005/076240 A2 ist ein System bekannt, bei dem über eine Energiezählerkommunikationsschnittstelle Daten von Energiezählern empfangen werden und über ein Kommunikationsmodul an eine Zentrale übertragen werden.

Zur Erfassung von Messwerten werden verschiedenste Sensoren eingesetzt. Beispiele von Sensoren sind Wettersensoren, die Wetterdaten wie Temperatur und Niederschlag erfassen. Auch sind Globalstrahlungssensoren bekannt, die zur Erfassung eines Momentanwerts der Globalstrahlung eingesetzt werden. Hierbei kommen Pyranometer zum Einsatz. Mit Hilfe der Globalstrahlungssensoren ist es möglich, die auf eine horizontale Empfangsfläche auftreffende Solarstrahlung zu erfassen, wobei neben der direkten Sonnenstrahlung auch Diffusionsstrahlung, die über Streuung an Wolken, Wasser- und Staubteilchen der Erdoberfläche entsteht, erfasst werden kann.

Insbesondere bei regenerativen Energiequellen spielt häufig das Wetter einen entscheidenden Einfluss auf die Energiegewinnung. Bei Windenergieanlagen ist sicherlich die Windstärke als auch die Windrichtung ein Kriterium, bei Solaranlagen die Globalstrahlung. Die von den regenerativen Energiegewinnungsanlagen gewonnene Energie wird mittels geeichter Energiezähler gemessen. Die geeichten Energiezähler sind häufig fernauslesbar gestaltet. Hierzu können unterschiedliche Zähler, insbesondere Stromzähler, aber auch andere Verbrauchszähler wie Gaszähler oder Wasserzähler, insbesondere über Funkkommunikation eine Kommunikation mit einer Energiezählerkommunikationsschnittstelle, insbesondere einem Gateway, einem Energiezählergateway oder einer Multi-Utility-Communication-Controller (MUC-C) Schnittstelle aufnehmen. Nachfolgend werden die Begriffe Energiezählerkommunikationsschnittstelle, Gateway, Energiezählergateway oder Multi-Utility-Communication-Controller (MUC-C) Schnittstelle verwendet, wobei die Begriffe können Synonym verwendet werden können.

Die Kommunikation zwischen den Verbrauchszählern und der Energiezählerkommunikationsschnittstelle erfolgt insbesondere über das Wireless-Meter-Bus Protocol gemäß DIN 13757. Die Datensätze, die zwischen den geeichten Energiezählern und der Energiezählerkommunikationsschnittstelle ausgetauscht werden, folgen diesem Protokoll und den Vorgaben der Open Metering System Specification.

Die Energiezählerkommunikationsschnittstelle eignet sich somit zum Erfassen von Verbrauchsdaten von geeichten und nicht geeichten Energiezählern, insbesondere Strom-, Gas-, Wasserzählern, insbesondere solchen die an regenerativen Energiegewinnungsanlagen installiert sind, über drahtgebundene oder drahtlose Kommunikation auf der einen Seite und zum Senden der Messdaten an eine zentrale Abrechnungszentrale auf der anderen Seite. Die Energiezählerkommunikationsschnittstelle ist dabei häufig über ein Weitverkehrsnetz mit der Abrechnungszentrale des Messstellenbetreibers verbunden. Hierbei kommt z.B. eine Kommunikation über ein Internetprotokoll, insbesondere TCP/IP in Frage.

Die bestehende Kommunikationsinfrastruktur aus Abrechnungszentrale, Energiezählerkommunikationsschnittstelle und Energiezähler wird derzeit ausschließlich zur Übertragung der Messwerte der verwendet. Jedoch stellt sich aufgrund der hohen Investitionskosten in die Energiezählerkommunikationsschnittstellen und die intelligenten Energiezähler, die mit diesen kommunizieren können, die Frage der weiteren Verwendbarkeit der Energiezählerkommunikationsschnittstellen.

Aus diesem Grunde lag dem Gegenstand die Aufgabe zugrunde, eine Energiezählerkommunikationsschnittstelle variabel und vielseitig einsetzbar zu machen. Diese Aufgabe wird durch einen Schnittstelleneinrichtung nach Anspruch 1 und ein System nach Anspruch 8 gelöst.

Insbesondere weist die Schnittstelleneinrichtung ein Kommunikationsmittel für eine Kommunikation mit einer Energiezählerkommunikationsschnittstelle mittels eines Messwertübertragungsprotokolls auf. Somit kann die gegenständliche Schnittstelleneinrichtung mit einer Energiezählerkommunikationsschnittstelle kommunizieren. Diese Kommunikation erfolgt mittels eines Messwertübertragungsprotokolls, welches insbesondere ein standardisiertes Übertragungsprotokoll ist.

Bei der Übertragung zwischen der Schnittstelleneinrichtung und der Energiezählerkommunikationsschnittstelle geben die Kommunikationsmittel den von dem Mikroprozessor ermittelten Ausgangswert in Form eines Datensatzes aus. Der Datensatz folgt dabei den Spezifikationen des Messwertübertragungsprotokolls, insbesondere enthält der Datensatz protokollspezifische Header und Adressbits sowie Prüfbits und ein Nutzdatenfeld (payload), in welchem der Ausgangswert abgelegt werden kann. Somit ist der Ausgangswert in Form eines Datensatzes des Messwertübertragungsprotokolls an die Energiezählerkommunikationsschnittstelle übertragbar.

Die Sensormesswerte am Eingang der Schnittstelleneinrichtung können von unterschiedlichen Sensoren, wie beispielsweise Wettersensoren, insbesondere Wind und Globalstrahlungssensoren erfasst werden. Außerdem können Sensorwerte aus Strommessungen, Spannungsmessungen, Impulsmessungen, Frequenzmessungen, Widerstandsmessungen und dergleichen als Eingangswert am Eingang anliegen.

Insbesondere können Analogmesswerte als Eingangswert an dem Eingang anliegen. Diese Analogmesswerte werden von dem Mikroprozessor in Digitalwerte mittels eines A/D Wandlers umgerechnet. Ferner können die von dem Mikroprozessor errechneten Ausgangswerte bereits in ein Format umgewandelt werden, welches sich für die Kommunikation mittels des Messwertübertragungsprotokolls eignet. Ferner kann der Mikroprozessor aus dem Eingangswert, insbesondere dem analogen Eingangswert einen eine physikalische Größe repräsentierenden Ausgangswert, insbesondere in digitaler Form erzeugen.

Wie Eingangs bereits erläutert, können bestehende Energiezählerkommunikationsschnittstellen drahtlos oder drahtgebunden über ein standardisiertes Messwertübertragungsprotokoll kommunizieren. Aus diesem Grunde wird vorgeschlagen, dass das Messwertübertragungsprotokoll das Wireless-Meter-Bus Schnittstellenprotokoll ist. Es ist jedoch auch das Schnittstellenprotokoll M-Bus, welches drahtgebunden operiert möglich. Das Messwertübertragungsprotokoll genügt vorzugsweise den Vorgaben der Open Metering System Specification (OMS).

Die Energiezählerkommunikationsschnittstelle ist ein Multi Utility Communication Controller (MUC-C) oder ein Gateway. Mit Hilfe des Multi Utility Communication Controllers oder des Gateways kann ein Messstellenbetreiber oder ein Messdienstleister eine Mehrzahl von Energiezählern fernauslesen. Mit Hilfe der gegenständlichen Schnittstelleneinrichtung wird die Energiezählerkommunikationsschnittstelle um eine weitere Funktion ergänzt, nämlich Messwerte von verschiedensten Sensoren erfassen zu können und diese an eine Abrechnungszentrale weiterleiten zu können.

Die Abrechnungszentrale kann eine Funktionseinheit sein oder aus verschiedenen Funktionseinheiten gebildet sein. So kann z.B. ein Frontend zum Empfang der Daten von der Energiezählerkommunikationsschnittstelle gebildet sein. Ein Zählerfernabfrageeinrichtung kann dieses Frontend aufweisen und darüber eine Fernabfrage der Energiezählerkommunikationsschnittstelle abwickeln.

Hierbei kann dem Kunden ein Mehrwert zur Verfügung gestellt werden, insbesondere kann die Zählerfernabfrageeinrichtung oder ein dieser zugeordneter Server ein Internetportal zur Verfügung stellen, über das ein Zugriff auf die Sensordaten erfolgen kann. Hierzu kann von dem Server eine Internetseite zur Verfügung gestellt werden, über die ein Nutzer die von seinen Sensoren erfassten Messwerte auslesen kann. Auch eine Fernsteuerung der Schnittstelleneinrichtung lässt sich mittels einer solchen Internetseite realisieren. Der Server kann eine Visualisierung der Sensordaten und die Steuerung der Schnittstelleneinrichtung über eine Internetseite realisieren, die unter Verwendung eines Nutzernamens und eines Passworts von einem entfernten Rechner aus abgerufen werden kann.

Die von der Zählerfernabfrageeinrichtung erfassten Messwerte können auch an ein Abrechnungssystem der Abrechnungszentrale weitergeleitet werden. Hierbei kann z.B. eine Protokollumsetzung stattfinden, um die erfassten Messwerte in ein Format für das Abrechnungssystem zu bringen.

Es sind zumindest zwei Eingänge vorgesehen und der Mikroprozessor errechnet jeweils einen Ausgangswert für einen jeweiligen Eingangswert. Ferner wird dem jeweiligen Ausgangswert eine Identifikationsnummer zugeordnet.

Die Energiezählerkommunikationsschnittstelle empfängt mittels des Messwertübertragungsprotokolls unterschiedliche Messwerte. Jedem einzelnen Zähler als auch jeder einzelnen Schnittstelleneinrichtung, die mit einer Energiezählerkommunikationsschnittstelle kommuniziert, ist eine eindeutige Identifikationsnummer (ID) zugeordnet. Unter Verwendung des Messwertübertragungsprotokolls kann darüber hinaus jedem einzelnen Sensorwert der als Ausgangswert vorliegt, eine Identifikationsnummer zugeordnet werden. So ist es möglich, dass entweder im Header oder im Nutzdatenfeld des Datensatzes des Messwertübertragungsprotokolls ein Bereich vorgesehen ist, in dem die Identifikationsnummer eingetragen werden kann. Mit Hilfe dieser Identifikationsnummer kann die Energiezählerkommunikationsschnittstelle feststellen, von welchem Sensor der Wert stammt. Hierdurch ist es möglich, dass auch in der Abrechnungszentrale eine Zuordnung der Messwerte zu einem Sensor ermöglicht ist.

Auch wird vorgeschlagen, dass zumindest ein Stellausgang vorgesehen ist. Ein Stellausgang eignet sich zum Schalten von daran angeschlossenen Schaltgliedern, beispielsweise Relais oder dergleichen. Somit kann die Schnittstelleneinrichtung nicht nur Sensorwerte als Eingangswert erfassen, sondern auch Schaltglieder über den Stellausgang schalten. Hierzu ist vorgesehen, dass der Mikroprozessor eine über die Kommunikationsmittel in einem Datensatz des Messwertübertragungsprotokolls empfangenes Stellsignal in einen Stellausgangswert wandelt. Die Kommunikationsmittel können somit über das Messwertübertragungsprotokoll von der Energiezählerkommunikationsschnittstelle Stellsignale empfangen. Diese Stellsignale sind beispielsweise von einem Nutzer über eine Nutzerschnittstelle, insbesondere eine Internetseite eingegebene Steuersignale.

Mit Hilfe der Steuersignale können Verbraucher und/oder Erzeuger geschaltet werden. Insbesondere können regenerative Energieerzeugungsanlagen, insbesondere Solarpanels oder Windkraftanlagen, ein- und ausgeschaltet werden. Somit ist ein ferngesteuertes Ein- und Ausschalten beispielsweise eines Solarpanels oder einer Windkraftanlage über die Energiezählerkommunikationsschnittstelle möglich.

Das empfangene Stellsignal wird von dem Mikroprozessor in den Stellausgangswert umgewandelt und an dem Stellausgang wird dieser Stellausgangswert ausgegeben. Der Stellausgangswert kann beispielsweise ein logisches Ein oder ein logisches Aus sein oder andere Stellwerte, auch analoge Stellwerte, umfassen.

Gemäß einem vorteilhaften Ausführungsbeispiel wird vorgeschlagen, dass die Kommunikationsmittel zur bidirektionalen Kommunikation mit der Energiezählerkommunikationsschnittstelle mittels des Messwertsübertragungsprotokolls eingerichtet sind. Somit kann mittels der Kommunikationsmittel mit der Energiezählerkommunikationsschnittstelle in beide Richtungen Informationen ausgetauscht werden.

Insbesondere sind die Kommunikationsmittel zum Empfangen von Energiezählermesswerten von an die Energiezählerkommunikationsschnittstelle angeschlossenen Verbrauchern oder Erzeugern, insbesondere von regenerativen Energieerzeugern, vorzugsweise von Photovoltaikanlagen (PV-Anlagen) gebildet.

Neben der unmittelbaren Übertragung von Energiezählermesswerten von der Energiezählerkommunikationsschnittstelle an die Abrechnungszentrale bzw. die Zählerfernabfrage ist es alternativ oder zusätzlich möglich, dass ein Energiezähler seine Messdaten, insbesondere die einer PV-Anlage, an die Energiezählerkommunikationsschnittstelle sendet und diese dann wiederum diese Daten (neben der möglichen Übertragung an die Zählerfernabfrage) an die Schnittstelleneinrichtung überträgt. Wie bereits erläutert kann ein Energiemesswert von einer Photovoltaikanlage stammen, jedoch sind auch Energiezählermesswerte von anderen Energieerzeugungsanlagen, beispielsweise Windkraftanlagen, Biomasseanlagen, Wasserkraftanlagen oder dergleichen oder von Verbrauchern erfass- und/oder übertragbar.

Um innerhalb der Schnittstelleneinrichtung, insbesondere dem Mikroprozessor der Schnittstelleneinrichtung oder einem daran angeschlossenen Computer eine Auswertung eines Wirkungsgrades einer Energiegewinnungsanlage, insbesondere einer Photovoltaikanlage zu ermöglichen, wird vorgeschlagen, dass der Mikroprozessor zur Umwandlung eines Eingangswerts eines Sensors, insbesondere eines Globalstrahlsensors gebildet ist. Auch ist es möglich, den Eingangswert des Sensors in ein Verhältnis zu einem gemessenen Zählwert eines einer Energiegewinnungsanlage zugeordneten Energiezählers zu setzen und hieraus Schlüsse über den Wirkungsgrad der Energiegewinnungsanlage zu ziehen. Dies ist insbesondere auch dann möglich, wenn der Messwert eines Globalstrahlungssensors in einen Ausgangswert gewandelt wird. Sowohl der Energiezählermesswert als auch der Ausgangswert des Globalstrahlungssensors sind dann innerhalb als auch außerhalb der Schnittstelleneinrichtung abrufbar und zur Auswertung verwendbar. Insbesondere kann die Schnittstelleneinrichtung eine weitere Kommunikationseinrichtung zur Kommunikation mit einem Computer aufweisen. Diese kann beispielsweise eine Netzwerkkarte sein, über die mittels LAN oder W-LAN eine Kommunikation mit einem Computer ermöglicht wird, so dass der Computer sowohl auf die Werte des Sensors als auch auf die Messwerte des Energiezählers zurückgreifen kann und lokal eine Auswertung durchführen kann. Andererseits kann der Messwert des Sensors an die Energiezählerkommunikationsschnittstelle übertragen werden und von dort zusammen mit dem Energiezählermesswert an den Messstellenbetreiber bzw. eine zentrale Abrechnungsstation, insbesondere über das Internet gesendet werden.

Gemäß einem vorteilhaften Ausführungsbeispiel wird auch vorgeschlagen, dass die Kommunikationsmittel zur verschlüsselten Kommunikation mit der Energiezählerkommunikationsschnittstelle gebildet sind. Hierdurch kann die Kommunikation der Sensordaten als auch die Kommunikation von Stelldaten gegenüber Angriffen gesichert werden.

Gemäß einem vorteilhaften Ausführungsbeispiel wird auch vorgeschlagen, dass eine solarbetriebene Energiequelle zur Energieversorgung der Schnittstellenvorrichtung in der Schnittstellenvorrichtung vorgesehen ist. Insbesondere bei einem Außeneinsatz in der Nähe einer Energiegewinnungsanlage, wie beispielsweise einer Photovoltaikanlage, kann mit Hilfe der solarbetriebenen Energiequelle die Schnittstelleneinrichtung frei von einer externen Energieversorgung operieren. Dies erhöht den Einsatzbereich der Schnittstelleneinrichtung. Auch kann ein Akku vorgesehen sein, der durch die solarbetriebene Energiequelle geladen wird und bei Dunkelheit die Schnittstelleneinrichtung mit Energie versorgt. Ferner kann die Schnittstelleneinrichtung in einem gekapselten Gehäuse vorgesehen sein, so dass Umwelteinflüsse keinen Einfluss auf die Funktionalität der Einrichtung haben.

Ein weiterer Gegenstand ist ein System mit einer zuvor beschriebenen Schnittstelleneinrichtung und einer Energiezählerkommunikationsschnittstelle, wobei die Energiezählerkommunikationsschnittstelle mit zumindest einem Energiezähler mittels des Messwertübertragungsprotokolls kommuniziert und die Energiezählerkommunikationsschnittstelle mit der Schnittstelleneinrichtung mittels des Messwertübertragungsprotokolls kommuniziert.

Insbesondere wird auch vorgeschlagen, dass die Energiezählerkommunikationsschnittstelle über ein Weitverkehrsnetz mit einer Abrechnungszentrale eines Messstellenbetreibers oder Messdienstleister kommuniziert. Diese Kommunikation kann vorzugsweise über das Internet erfolgen. Insbesondere ist eine Kommunikation mittels TCP/IP möglich.

Die zuvor genannten Verfahren können auch als Computerprogramm oder als auf einem Speichermedium gespeichertes Computerprogramm realisiert werden. Hierbei kann erfassungsmittelseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: ein System mit einer Schnittstelleneinrichtung und einem Multi-Utility-Communication-Controller;
- Fig. 2: eine Detailansicht einer Schnittstelleneinrichtung.

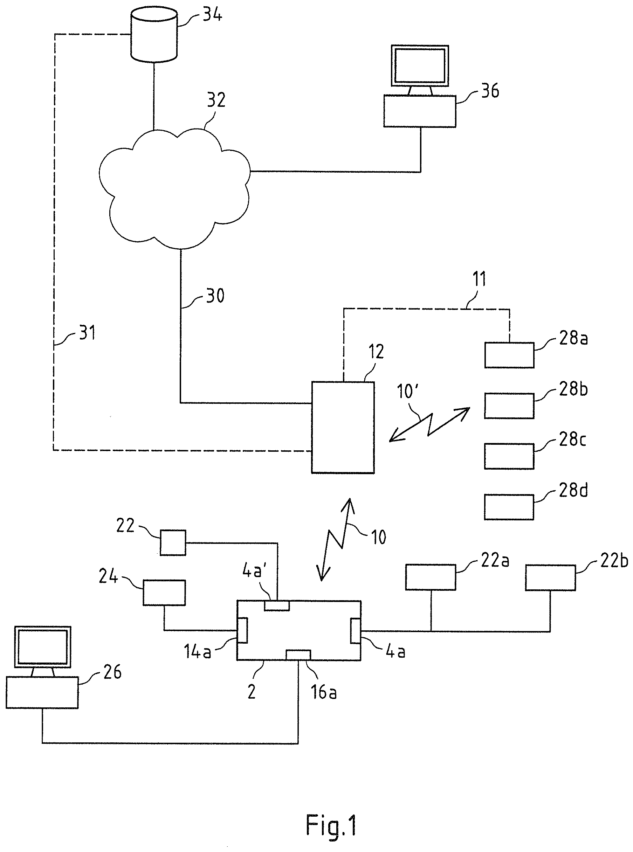

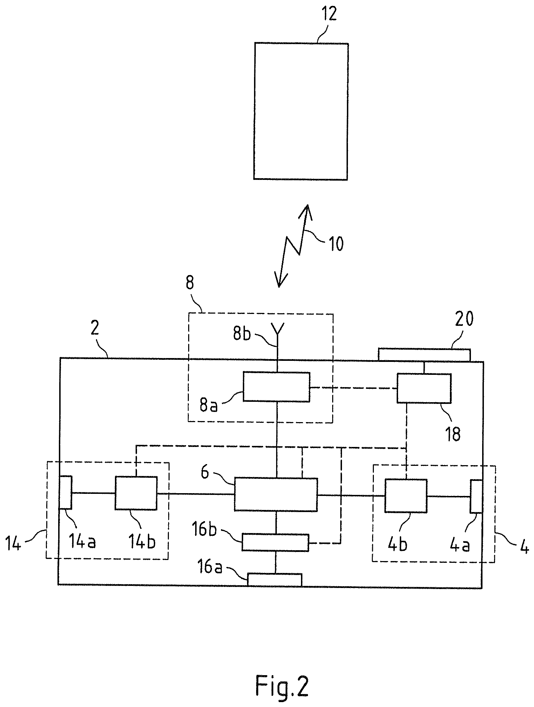

Fig. 1 zeigt eine Schnittstelleneinrichtung 2, die in Fig. 2 detaillierter dargestellt ist.

Wie der Fig. 2 zu entnehmen ist, weist die Schnittstelleneinrichtung 2 einen Eingang 4 mit einem Anschluss 4a und einem diesen Anschluss 4a steuernden Mikrocontroller 4b. Es ist lediglich beispielhaft nur ein einzelner Eingang 4 dargestellt, jedoch eignet sich die Schnittstelleneinrichtung 2 auch für eine Mehrzahl von Eingängen 4.

Der Mikrocontroller 4b kann dazu eingerichtet sein, eine serielle oder parallele Kommunikation über ein an den Anschluss 4 angeschlossenes Kabel zu gewährleisten. Auch kann der Mikrocontroller 4b so gestaltet sein, dass über ein an den Anschluss 4 angeschlossenes Kabel eine Mehrzahl von Sensoren ihre Messwerte liefern können.

In der Schnittstellenvorrichtung 2 ist ferner ein Mikroprozessor 6 angeordnet, sowie ein Kommunikationsmittel 8 mit einem Kommunikationsprozessor 8a und einer Antenne 8b.

Der Kommunikationsprozessor 8a ist so gestaltet, dass er drahtlos Signale über die Antenne 8b senden und empfangen kann. Der Kommunikationsprozessor 8a ist so programmiert, dass er die über die Antenne 8b ausgesendeten Signale gemäß einem Wireless-Meter-Bus Schnittstellenprotokoll versendet.

In der Fig. 2 ist zu erkennen, dass die Kommunikation über eine drahtlose Funkstrecke 10 mit einer Energiezählerkommunikationsschnittstelle die z.B. als Multi-Utility-Communication-Controller (MUC-C) oder Gateway 12 gebildet ist, stattfindet. Hierzu umfasst das Gateway 12 ein Funkmodul, über welches mittels des Messwertübertragungsprotokolls kommuniziert werden kann. Das Funkmodul ermöglicht die drahtlose Kommunikation über Funkstrecken 10, 10' mit einer Mehrzahl von Kommunikationspartnern.

Die Kommunikation über die Funkstrecke 10 erfolgt über das Wireless-Meter-Bus Schnittstellenprotokoll.

Die Schnittstelleneinrichtung 2 umfasst des Weiteren einen Ausgang 14 mit einem Anschluss 14a und einem Mikrocontroller 14b. Über den Mikrocontroller 14b kann an dem Anschluss 14a zumindest ein Schaltsignal ausgegeben werden.

An den Mikrocontroller 6 sind des Weiteren ein zusätzlicher Mikrocontroller 16a angeschlossen, über den an einem Anschluss 16b ein Computer angeschlossen werden kann, beispielsweise mittels einer Netzwerkverbindung, z.B. einer W-LAN Verbindung oder auch mittels einer RS232-Schnittstelle oder einer anderen gängigen Schnittstellentechnik.

Schließlich ist in der Schnittstelleneinrichtung 2 ein Akku 18 zur Energieversorgung der vorgenannten Einheiten innerhalb der Schnittstelleneinrichtung 2 vorgesehen. Der Akku 18 kann vorzugsweise über ein Solarpanel 20 geladen werden, so dass eine autarke Energieversorgung sichergestellt ist.

An dem Anschluss 4a können verschiedenste Sensoren 22a, 22b angeschlossen sein. Es ist möglich, dass ein Anschluss 4a Analogwerte als auch Digitalwerte empfängt. Mögliche Sensoren 22a, 22b können Strom-, Spannungs-, Impuls-, Frequenzsensoren, Widerstandsmesser oder dergleichen sein. Auch können Windmesser vorgesehen sein.

An einem weiteren Anschluss 4a' kann ein Globalstrahlungssensor 22 angeschlossen sein.

Schließlich kann zumindest ein Relais 24 an einem Anschluss 14a des Ausgangs 14 angeschlossen sein.

Über den Anschluss 16 kann ein Computer 26 eines Nutzers angeschlossen sein.

Das Gateway 12 kommuniziert über eine zweite Funkstrecke 10' ebenfalls mittels des Wireless-Meter-Bus Protokolls mit zumindest einem Energiezähler 28a-d. Wie bereits erwähnt, umfasst das Gateway 12 hierzu ein Funkmodul, über das mehrere Funkstrecken 10, 10' aufgebaut werden können. Auch kann ein Kommunikationsmodul zur drahtgebundenen Kommunikation mit einem, vorzugsweise genau einem Energiezähler 28a über eine verdrahtete Verbindung 11 erfolgen.

Schließlich kommuniziert das Gateway 12 über eine Weitverkehrsverbindung 30 oder 31 mit einer Abrechnungszentrale 34 bzw. der darin enthaltenen oder der daran angeschlossenen Zählerfernabfrage, z.B. über das Internet 32 mittels des TCP/IP Protokolls. Die Abrechnungszentrale 34 kann ebenfalls über das Internet 32 mit einem Computer 36 kommunizieren. Die Weitverkehrsverbindung 31 kann eine direkte Verbindung sein.

Das in Fig. 1 gezeigte System kann beispielhaft folgendermaßen betrieben werden.

Der Energiezähler 28a ist beispielsweise ein geeichter Energiezähler einer Photovoltaikanlage. Dieser Energiezähler misst die durch die Photovoltaikanlage zur Verfügung gestellte Energiemenge, insbesondere die in das Netz eingespeiste Energiemenge.

Die gemessene Energiemenge und/oder Leistung wird über die Funkstrecke 10c mittels des Wireless-Meter-Bus Protokolls an das Gateway 12 übertragen. Das Gateway 12 überträgt die gemessenen Werte mittels der Verbindung 30 an die Abrechnungszentrale 34, so dass eine Einspeisevergütung des Betreibers der Photovoltaikanlage erfolgen kann.

Der Betreiber der Photovoltaikanlage möchte jedoch auch Kenntnis über den Wirkungsgrad seiner Anlage erhalten. Aus diesem Grunde übermittelt das Gateway 12 über die Funkstrecke 10 an die Schnittstelleneinrichtung 2 ebenfalls die gemessenen Werte. Die Schnittstelleneinrichtung 2 empfängt über den Anschluss 4a' von einem Globalstrahlungssensor 22 Globalstrahlungswerte, die beispielsweise die Strahlungswerte an der Photovoltaikanlage repräsentieren.

Mittels des Mikroprozessors 6 können die empfangenen Signale an den Anschluss 16a ausgegeben werden, so dass mittels eines lokalen Computers 26 ein Vergleich der tatsächlich gewonnenen Leistung mit anhand der Strahlungswerte berechneten theoretisch möglichen Leistungswerten erfolgen kann.

Die Schnittstelleneinrichtung 2 kann zusätzlich über den Anschluss 4a weitere Sensormesswerte empfangen. Die empfangenen Messwerte können in dem Mikroprozessor 6 beispielsweise von einem Analogwert in einen Digitalwert gewandelt werden. Anschließend können die Messwerte in einen Datensatz eingefügt werden, wobei der Datensatz ein Datensatz des Wireless-Meter-Bus Protokolls ist. Dieser Datensatz kann über die Funkstrecke 10 an das Gateway 12 übertragen werden, der seinerseits über die Datenverbindung 30 eine Verbindung mit der Abrechnungszentrale 34 aufweist, so dass die Sensormesswerte auch dorthin übertragen werden können.

Die Abrechnungszentrale 34 kann beispielsweise einen Internetserver zur Verfügung stellen, der eine Analyse der Sensormesswerte ermöglicht. Diese Internetseite kann beispielsweise über den Computer 36 über das Internet 32 abgerufen werden. Ein Nutzer kann an dem Computer 36 somit neben Energiewerten, die von dem Energiezähler 28a gemessen wurden, auch Messwerte der Sensoren 22a, 22b empfangen. Der von dem Globalstrahlungssensor 22 erfasste Strahlungswert kann ebenfalls über die genannte Verbindung an die Abrechnungszentrale 34 übertragen werden. Mit Hilfe dieser Daten kann auch in der Abrechnungszentrale 34 eine Bewertung des Wirkungsgrades des an den Energiezähler 28a angeschlossenen Solarpanels erfolgen und graphisch zur Verfügung gestellt werden, so dass über den Computer 36 diese Information abrufbar ist.

Ein Eingreifen in die Funktion des Solarpanels oder ein Steuern eines sonstigen Aktors kann über den Computer 36 beispielsweise derart erfolgen, dass dieser ein Steuersignal an die Abrechnungszentrale 34 übermittelt. Die Abrechnungszentrale 34 übermittelt dann über die Verbindung 30 dieses Steuersignal an das Gateway 12, das dieses über die Funkstrecke 10 mittels des Wireless-Meter-Bus Protokolls an die Schnittstelleneinrichtung 2 überträgt. In der Schnittstelleneinrichtung 2 kann das Steuersignal mittels des Mikroprozessors 6 in einen Stellausgangswert gewandelt werden, der an den Anschluss 14a des Ausgangs 14 angelegt wird. Mit Hilfe des Stellausgangswerts kann beispielsweise das Relais 24 geschaltet werden.

Die gezeigte Schnittstellenvorrichtung 2 erweitert das Funktionsspektrum eines Gateways 12 durch Verwendung des Wireless-Meter-Bus Protokolls.

## Patentansprüche

1. Schnittstelleneinrichtung (2) mit,
- zumindest einem Sensormesswerte als Eingangswert empfangenden Eingang (4a, 4a'),
- zumindest einem den Eingangswert in einen Ausgangswert wandelnden Mikroprozessor (6), und
- einem den Ausgangswert ausgebenden Kommunikationsmittel (8),
- wobei das Kommunikationsmittel (8) für eine Kommunikation mit einer als Gateway oder Multi-Utility-Communication-Controller gebildeten Energiezählerkommunikationsschnittstelle (12) mittels eines Messwertübertragungsprotokolls eingerichtet ist,
- das Kommunikationsmittel (8) den Ausgangswert in Form eines Datensatz des Messwertübertragungsprotokolls an die Energiezählerkommunikationsschnittstelle (12) überträgt, und
- dass zumindest zwei Eingänge (4a, 4a') vorgesehen sind und dass der Mikroprozessor (6) jeweils einen Ausgangswert für einen jeweiligen Eingangswert errechnet und dem jeweiligen Ausgangswert eine Identifikationsnummer zuordnet.

2. Schnittstelleneinrichtung nach Anspruch 1, **dadurch gekennzeichnet, dass** das Messwertübertragungsprotokoll das Wireless-Meter-Bus Schnittstellenprotokoll ist.

3. Schnittstelleneinrichtung nach einem der Ansprüche 1 bis 2, **dadurch gekennzeichnet, dass** zumindest ein Stellausgang (14) vorgesehen ist,
- dass der Mikroprozessor (6) ein über die Kommunikationsmittel (8) in einem Datensatz des Messwertübertragungsprotokolls empfangenes Stellsignal in einen Stellausgangswert wandelt, und
- dass der Stellausgang (14) den Stellausgangswert ausgibt.

4. Schnittstelleneinrichtung nach einem der Ansprüche 1 bis 3, **dadurch gekennzeichnet, dass** die Kommunikationsmittel (8) zur bidirektionalen Kommunikation mit der Energiezählerkommunikationsschnittstelle (12) mittels des Messwertübertragungsprotokolls gebildet sind.

5. Schnittstelleneinrichtung nach einem der Ansprüche 1 bis 4, **dadurch gekennzeichnet, dass** der Mikroprozessor (6) zur Umwandlung eines Eingangswertes eines Globalstrahlungssensors (22) gebildet ist, derart, dass dieser einen Messwert des Globalstrahlungssensors (22) in einen Ausgangswert wandelt.

6. Schnittstelleneinrichtung nach einem der Ansprüche 1 bis 5, **dadurch gekennzeichnet, dass** die Kommunikationsmittel (8) zur verschlüsselten Kommunikation mit der Energiezählerkommunikationsschnittstelle (12) gebildet sind.

7. Schnittstelleneinrichtung nach einem der Ansprüche 1 bis 6, **dadurch gekennzeichnet, dass** eine solarbetriebene Energiequelle zur Energieversorgung der Schnittstellenvorrichtung (2) in der Schnittstellenvorrichtung (2) vorgesehen ist.

8. System mit einer Schnittstelleneinrichtung nach einem der Ansprüche 1 bis 7 und einer Energiezählerkommunikationsschnittstelle (12) wobei die Energiezählerkommunikationsschnittstelle (12) mit zumindest einem Energiezähler (28) mittels des Messwertübertragungsprotokolls kommuniziert und die Energiezählerkommunikationsschnittstelle (12) mit der Schnittstelleneinrichtung (2) mittels des Messwertübertragungsprotokolls kommuniziert.

9. System nach Anspruch 8, **dadurch gekennzeichnet, dass** die Energiezählerkommunikationsschnittstelle (12) über ein Weitverkehrsnetz (30, 31), insbesondere das Internet, insbesondere mittels TCP/IP, mit einer Abrechnungszentrale (34) kommuniziert.

## Claims

1. Interface device (2) having,
- at least one input (4a, 4a'), which receives sensor measurement values as an input value,
- at least one microprocessor (6), which converts the input value into an output value, and
- a communication means (8), which outputs the output value,
- wherein the communication means (8) is designed for communication with an energy meter communication interface (12), which is formed as a gateway or multi-utility communication controller, by means of a measurement value transmission protocol,
- the communication means (8) transmits the output value in the form of a data record of the measurement value transmission protocol to the energy meter communication interface (12), and that
- at least two inputs (4, 4a') are provided, and that the microprocessor (6) in each case calculates an output value for a respective input value and assigns an identification number to the respective output value.

2. Interface device according to Claim 1, **characterised in that** the measurement value transmission protocol is the wireless meter bus interface protocol.

3. Interface device according to either of Claims 1 and 2, **characterised in that** at least one control output (14) is provided, **in that**
- the microprocessor (6) converts a control signal received via the communication means (8) in a data record of the measurement value transmission protocol into a control output value, and **in that**
- the control output (14) outputs the control output value.

4. Interface device according to any one of Claims 1 to 3, **characterised in that** the communication means (8) are formed for bidirectional communication with the energy meter communication interface (12) by means of the measurement value transmission protocol.

5. Interface device according to any one of Claims 1 to 4, **characterised in that** the microprocessor (6) is formed for converting an input value of a global solar radiation sensor (22) such that it converts a measurement value of the global solar radiation sensor (22) into an output value.

6. Interface device according to any one of Claims 1 to 5, **characterised in that** the communication means (8) are formed for encrypted communication with the energy meter communication interface (12).

7. Interface device according to any one of Claims 1 to 6, **characterised in that** a solar-powered energy source is provided in the interface device (2) for supplying energy to the interface device (2).

8. System having an interface device according to any one of Claims 1 to 7 and having an energy meter communication interface (12), wherein the energy meter communication interface (12) communicates with at least one energy meter (28) by means of the measurement value transmission protocol and the energy meter communication interface (12) communicates with the interface device (2) by means of the measurement value transmission protocol.

9. System according to Claim 8, **characterised in that** the energy meter communication interface (12) communicates with an accounting centre (34) via a wide-area network (30, 31), in particular the internet, in particular by means of TCP/IP.

## Revendications

1. Dispositif d'interface (2) comprenant
- au moins une entrée (4a, 4a') recevant, comme valeur d'entrée, des valeurs de mesure de capteurs,
- au moins un microprocesseur (6) transformant la valeur d'entrée en une valeur de sortie, et
- un moyen de communication (8) fournissant la valeur de sortie,
- où le moyen de communication (8) est agencé pour une communication avec une interface de communication de compteurs d'énergie (12), ladite interface étant formée comme une passerelle ou comme un contrôleur de communication multiservices, ladite communication étant réalisée au moyen d'un protocole de transmission de valeurs de mesure,
- le moyen de communication (8) transmet à l'interface de communication de compteurs d'énergie (12), la valeur de sortie se présentant sous la forme d'un enregistrement de données du protocole de transmission de valeurs de mesure, et
- en ce qu'il est prévu au moins deux entrées (4a, 4a') et en ce que le microprocesseur (6) calcule à chaque fois une valeur de sortie pour une valeur d'entrée respective et affecte un numéro d'identification à la valeur de sortie respective.

2. Dispositif d'interface selon la revendication 1, **caractérisé en ce que** le protocole de transmission de valeurs de mesure est le protocole d'interface de bus de compteur sans fil.

3. Dispositif d'interface selon l'une des revendications 1 à 2, **caractérisé en ce qu'**il est prévu au moins une sortie de réglage (14),
- **en ce que** le microprocesseur (6) transforme un signal de réglage en une valeur de sortie de réglage, ledit signal de réglage étant reçu, par les moyens de communication (8), dans un enregistrement de données du protocole de transmission de valeurs de mesure, et
- **en ce que** la sortie de réglage (14) fournit la valeur de sortie de réglage.

4. Dispositif d'interface selon l'une quelconque des revendications 1 à 3, **caractérisé en ce que** les moyens de communication (8) servant à la communication bidirectionnelle avec l'interface de communication de compteurs d'énergie (12) sont formés au moyen du protocole de transmission de valeurs de mesure.

5. Dispositif d'interface selon l'une quelconque des revendications 1 à 4, **caractérisé en ce que** le microprocesseur (6) est formé pour servir à la transformation d'une valeur d'entrée d'un capteur de rayonnement global (22), de manière telle, que ledit microprocesseur transforme une valeur de mesure du capteur de rayonnement global (22), en une valeur de sortie.

6. Dispositif d'interface selon l'une quelconque des revendications 1 à 5, **caractérisé en ce que** les moyens de communication (8) sont formés pour servir à la communication codée avec l'interface de communication de compteurs d'énergie (12).

7. Dispositif d'interface selon l'une quelconque des revendications 1 à 6, **caractérisé en ce qu'**il est prévu, dans le dispositif d'interface (2), une source d'énergie servant à l'alimentation en énergie du dispositif d'interface (2), ladite source d'énergie fonctionnant grâce à une alimentation solaire.

8. Système comprenant un dispositif d'interface selon l'une quelconque des revendications 1 à 7, et une interface de communication de compteurs d'énergie (12), où l'interface de communication de compteurs d'énergie (12) communique avec au moins un compteur d'énergie (28) au moyen du protocole de transmission de valeurs de mesure, et l'interface de communication de compteurs d'énergie (12) communique avec le dispositif d'interface (2) au moyen du protocole de transmission de valeurs de mesure.

9. Système selon la revendication 8, **caractérisé en ce que** l'interface de communication de compteurs d'énergie (12) communique avec un centre de facturation (34), par un réseau de trafic à grande distance (30, 31), en particulier le réseau Internet, en particulier au moyen du protocole TCP/IP.
